# EUROPEAN PATENT SPECIFICATION

(11) **EP 0 884 490 B1**
(45) Date of publication and mention of the grant of the patent: **14.12.2005**
(21) Application number: 98304563.4
(22) Date of filing: 09.06.1998
(51) Int. Cl.: F16C 27/00

(54) **Squeeze film damper bearing**
Lager mit Flüssigkeitsfilmdämpfung
Palier à amortissement par film de fluide comprimé

(30) Priority: 10.06.1997 JP 15207397
(43) Date of publication of application: 16.12.1998
(73) Proprietor: ISHIKAWAJIMA-HARIMA JUKOGYO KABUSHIKI KAISHA, Chiyoda-ku Tokyo-to (JP)
(72) Inventor: Une, Soichiro, Odawara-shi, Kanagawa-ken (JP); Saito, Osamu, Matsudo-shi, Chiba-ken (JP); Saito, Shinobu, Chiba-shi, Chiba-ken (JP); Kobayashi, Masao, Shiki-shi, Saitama-ken (JP)
(74) Representative: Jennings, Nigel Robin

(56) References cited:
- DE-A- 2 847 979
- FR-A- 2 611 008
- US-A- 3 122 399
- US-A- 4 222 618
- US-A- 4 440 456
- US-A- 4 772 135
- US-A- 5 116 143
- PATENT ABSTRACTS OF JAPAN vol. 97, no. 2, 28 February 1997 (1997-02-28) & JP 08 261231 A (ISHIKAWAJIMA HARIMA), 8 October 1996 (1996-10-08)

## Description

The present invention relates to a squeeze film damper bearing for supporting a rotary shaft, in particular a shaft which rotates at high speed, such as the shaft of a centrifugal compressor.

Squeeze film damper bearings are bearings in which a fluid film is formed between a fixed surface and the bearing for support of a rotating shaft, thereby supporting the bearing by fluid film pressure. The bearing is particularly characterised by its ability to damp any vibration of the shaft being rotated at high speed, and is very useful as a bearing for a turbocompressor, a turbocharger or the like.

A typical example of a squeeze film damper bearing is disclosed in JP-A-58-109718 wherein an oil film is formed by supplying oil into a gap between a fixed support surface and an outer ring presser of a roller bearing. The presser is supported by a number of bolts which extend parallel to the shaft and enclose the shaft from the fixed side, which bolts also act as a spring means. The bearing is thus supported by the spring means and by the oil film provided in parallel with the spring means to thereby provide a squeeze film damper bearing.

However, the bearing described above is difficult to assemble with high accuracy and is therefore very expensive. It also requires a great deal of space in the axial direction and is therefore not practicably usable in small rotary machines in which space is limited. Japanese Patent Application No. 7-60683 (JP-A-8-261231), which is owned by the present applicant, aims to overcome this problem.

The bearing disclosed in JP-A-8-261231 comprises a bearing bush for supporting a rotating shaft, a bearing casing surrounding the bearing bush and highly rigid concentricity spring means in the form of arcuate members between the bearing bush and the bearing casing. The bearing bush is stepped to have a reduced diameter at its opposed ends. Formed in the inner surface of the bearing casing is an annular groove opposed to the stepped portions of the bearing casing. The spring means is placed between the groove and the stepped portions and comprises arcuate members, i.e. circumferentially equiangularly divided portions of a cylinder. The arcuate members have outer projections which are parallel to the axis of the members and are equiangularly spaced apart to be at circumferentially opposite ends and at a midway portion. The arcuate members also have inner projections which are parallel to the axis and situated midway between the adjacent outer projections. The inner and outer projections contact the stepped portions of the bearing bush and support surfaces constituted by the bases of the grooves in the bearing casing, respectively, so that the bearing bush is supported by the bearing casing via the concentricity spring means to provide a gap between the outer periphery of the bearing bush and the inner surface of the bearing casing. An oiling passage communicates with the gap so as to generate oil film pressure as required.

The advantageous effects of the above bearing are as follows:

The bearing bush is supported by the support surfaces of the bearing casing via the projections on the concentricity spring means. As a result, a gap of predetermined size is formed between the outer periphery of the bearing bush and the inner surface of the bearing casing. Oil is supplied into the gap to generate oil film pressure as required. The high rigidity of the spring means will assure the presence of the oil film since it prevents the surface of the bearing bush from directly contacting the inner surface of the bearing casing even when a high vibrating or fluttering force is applied to the shaft.

The spring means comprises circumferentially divided arcuate members which are slightly deformable by the pressure applied by the bearing casing to adapt to the shape of the gap between the outer periphery of the stepped portion of the bearing bush and the support surface of the bearing casing which extends around the bearing bush. As a result, close contact of the bearing bush and bearing casing with the inner and outer projections of the spring means can be maintained even if manufacturing accuracy is relatively low, and the bearing can be supported highly accurately. Furthermore, support of the bearing bush via the spring means can be achieved independently from and in parallel with support of the bearing bush via the oil film, so that the attenuating or damping effect of the oil film can be estimated by calculation.

In the squeeze film damper bearing described above, the spring means usually used comprises two semi-circular members, i.e. upper and lower spring members, used in combination. Each of the spring members has outer projections parallel to the axis and provided at the apex and circumferentially opposite ends. Each spring member also has inner projections parallel to the axis and provided at 45° to the horizontal. Such spring members are produced by masking portions of a cylindrical body which correspond to the inner and outer projections as required and removing the other portions by etching. The etched portions are thus formed in a concave shape while the masked portions are formed as projections. The cylindrical body is then cut off along a plane passing through the centres of diametrically opposed outer projections and including the axis to provide the spring members. The height of each of the projections may be in the order of several hundred µm.

As described above, the concentricity spring means used in the squeeze film damper bearing is produced by machining and etching from a thick cylindrical body, which results in a high material and manufacturing cost. Moreover, dimensional restrictions may make it difficult to vary the spring constant over a wide range in accordance with operating conditions.

It is thus the object of the present invention to provide a squeeze film damper bearing with concentricity spring means, which can be produced at low cost and in which the spring constant can be varied over a wide range.

According to the present invention there is provided a squeeze film damper bearing which comprises a bearing bush for supporting a rotary shaft, a bearing casing extending around the bearing bush and concentricity spring means between the bearing bush and the bearing casing, the inner surface of the bearing casing being provided with a circumferential central groove at least partially accommodating the spring means, characterised in that the spring means comprises an elongate steel sheet with a plurality of recesses formed in one surface of the steel sheet to provide a plurality of longitudinally aligned projections on the other surface of the steel sheet, the steel sheet being bent into a cylindrical shape such that the recesses and the projections are situated on the inner surface and the outer surface, respectively, of the bent steel sheet, that each of the projections has a curved surface with a generating line extending substantially parallel to the rotary shaft, that the inner periphery of the spring means accommodated in the groove is in contact with the outer periphery of the bearing bush and that the tips of the projections on the outer periphery of the spring means are in contact with the bottom surface of the groove.

The effects and advantages of the invention are as follows:

The inner periphery of the spring means accommodated in the groove in the bearing casing contacts the outer periphery of the bearing bush. The tips of the projections on the outer periphery of the spring means contact the base of the groove in the bearing casing. Thus, the bearing bush is elastically supported by the bearing casing via the concentricity spring means with a gap of predetermined size being defined between the outer periphery of the bearing bush and the inner surface of the bearing casing. Oil is supplied to this gap to generate oil film pressure as required so that any vibration and fluttering of the rotation shaft is attenuated.

The concentricity spring means may be produced by press-machining one surface of an elongate thin steel sheet to provide a plurality of longitudinally aligned projections on the other surface of the steel sheet and by bending the steel plate into a cylinder. This results in a reduction in material usage and manufacturing cost. The spring constant may be varied by varying the thickness and/or width of the steel sheet, the depth of the recesses (height of the projections) and/or the number of the recesses. The spring constant may thus readily be varied over a wide range.

One specific embodiment of the present invention will be described below with reference to the attached drawings; in which:

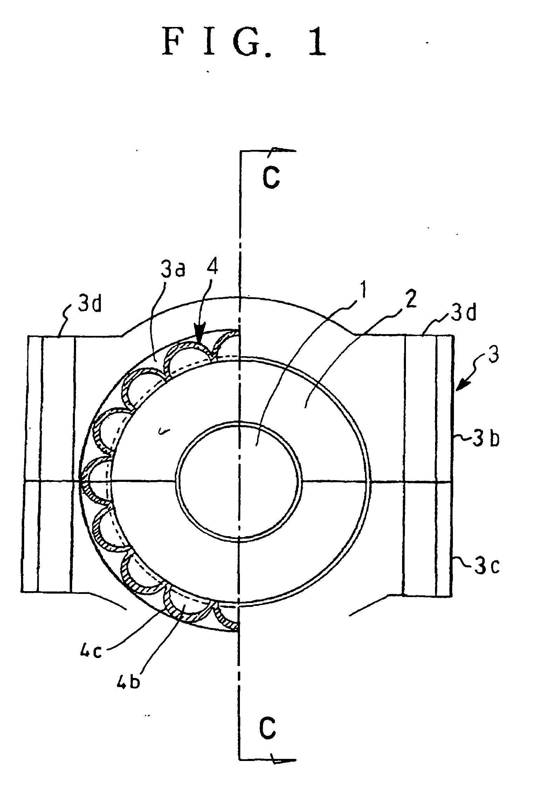

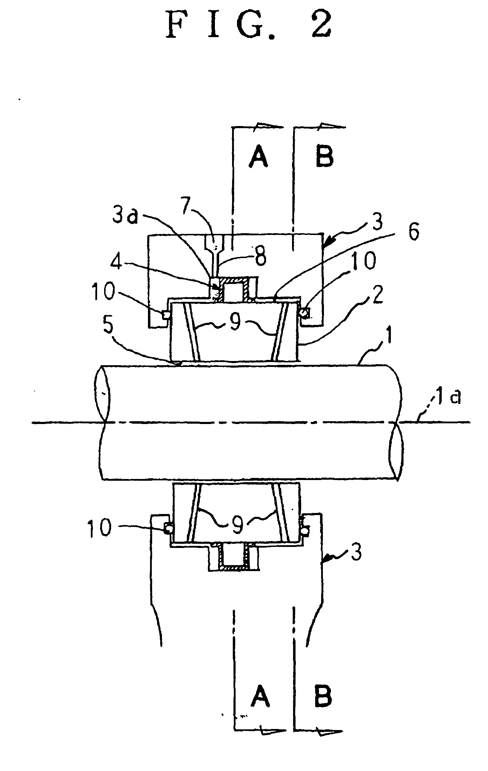

Figure 1 is a front sectional view of a squeeze film damper bearing according to the present invention in which the left and right-hand halves are views in the directions of the arrows A-A and B-B in Figure 2, respectively;
Figure 2 is a sectional view in the direction of the arrows C-C in Figure 1;

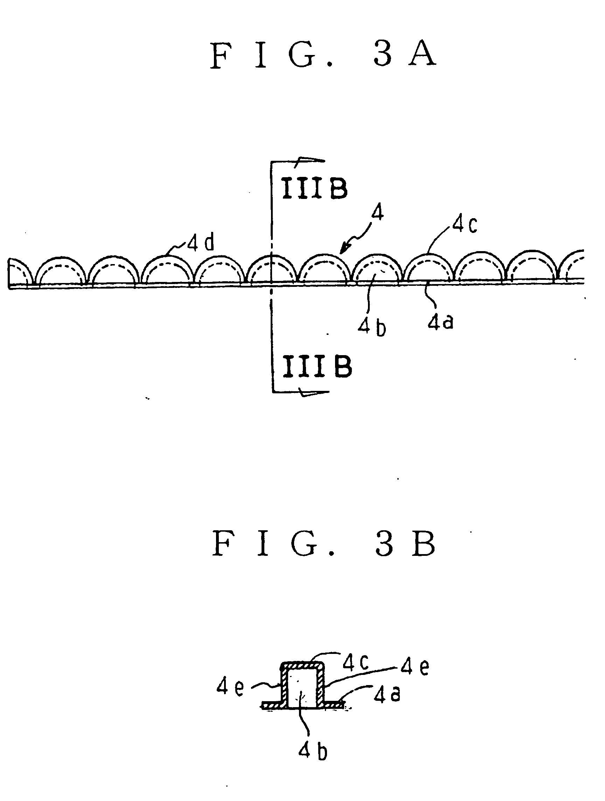

Figure 3A is a side view of the concentricity spring means during fabrication; and
Figure 3B is a view in the direction of the arrows IIIB-IIIB in Figure 3A.

Reference numeral 1 represents a rotary shaft which is rotated about an axis 1a at 60,000 to 80,000 rpm and has a diameter of about 20 to 30 mm; 2, a bearing bush or metallic bush which supports the shaft 1 via an oil film 5 and which has a diameter of about 60 to 80 mm and is divided into two parts; and 3, an annular bearing casing which covers or encloses the outer periphery and opposed side surfaces of the bush 2. The bearing casing 3 is provided on its inner periphery with a circumferential central groove 3a in which a concentricity spring 4 is accommodated. The bearing casing 3 comprises upper and lower casing halves 3b and 3c which are fastened together by bolts and nuts (not shown) passing through holes 3d.

The concentricity spring 4 is made of an elongate stainless steel sheet 4a with thickness of 0.3 to 0.7 mm. Recesses 4b of about 1 to 3 mm in depth are formed by press-machining a surface of the sheet 4a to provide a number of longitudinally aligned projections 4c on the other surface of the sheet 4a. The sheet 4a is then bent into a cylindrical or annular shape so that it extends around the outer periphery of the bearing metal 2 with the projections 4c directed outwardly.

In this embodiment, the projections 4c are semi-cylindrical but this is not essential. It will suffice if each of the projections 4c has a curved surface 4d with a generating line extending parallel to the axis of the rotating shaft 1. The projections may be a shallower segment or may be of sinusoidal shape. The two opposed sides of the projections 4c are closed by substantially semi-cylindrical flat sheets 4e.

Reference numeral 7 denotes an oiling port; 8, a narrow passage which connects the port 7 with the groove 3a; 6, an oil film with thickness of about 0.1 to 0.2 mm to provide the squeeze film damper; 9, narrow passages which connect the oil film 6 to the oil film 5; and 10, oil seals.

The advantageous effects of the embodiment are as follows:

The inner periphery of the spring means 4 accommodated in the groove 3a in the bearing casing 3 contacts the outer periphery of the bearing bush 2. The tips of the projections 4c on the outer periphery of the spring means 4 contact the bottom surface of the groove 3a in the bearing casing 3. Thus, the bearing bush 2 is elastically supported by the bearing casing 3 via the concentricity spring means 4 with a gap of about 0.1 to 0.2 mm being formed between the outer periphery of the bearing bush 2 and the inner surface of the bearing casing 3. Oil is supplied through the port 7 to this gap to generate the oil film 6 so that any vibration or fluttering of the rotating shaft is attenuated. The concentricity spring means 4 is produced by press-machining the surface of the elongate thin steel sheet 4a, which results in reduction in material usage and manufacturing cost. The spring constant may be varied over a wide range by varying the thickness and/or width of the steel sheet 4a and/or the depth and/or the number of the recesses 4b.

Whilst the above-mentioned embodiment has a single concentricity spring means positioned at the lateral centre of the bearing bush, two spring means may be provided at respective lateral side edges of the bearing bush. In the embodiment, the single groove 3a is formed in the bearing casing 3 but cooperating grooves 3 a may be formed in the bearing casing 3 and the bearing metal 2, respectively.

## Claims

1. A squeeze film damper bearing which comprises a bearing bush (2) for supporting a rotary shaft (1), a bearing casing (3) extending around the bearing bush (2) and concentricity spring means (4) between the bearing bush (2) and the bearing casing (3), the inner surface of the bearing casing (3) being provided with a circumferential central groove (3a) at least partially accommodating the spring means (4), **characterised in that** the spring means (4) comprises an elongate steel sheet (4a) with a plurality of recesses (4b) formed in one surface of the steel sheet (4a) to provide a plurality of longitudinally aligned projections (4c) on the other surface of the steel sheet, the steel sheet (4a) being bent into a cylindrical shape such that the recesses (4b) and the projections (4c) are situated on the inner surface and the outer surface, respectively, of the bent steel sheet, that each of the projections (4c) has a curved surface (4d) with a generating line extending substantially parallel to the rotary shaft (1), that the inner periphery of the spring means (4) accommodated in the groove (3a) is in contact with the outer periphery of the bearing bush and that the tips of the projections (4c) on the outer periphery of the spring means (4) are in contact with the bottom surface of the groove (3a).

## Patentansprüche

1. Lager mit Squeeze-Film-Dämpfung, das eine Lagerbuchse (2) für die Unterstützung einer Drehwelle (1), ein Lagergehäuse (3), das sich um die Lagerbuchse (2) erstreckt, und Konzentritäts-Federmittel (4) zwischen der Lagerbuchse (2) und dem Lagergehäuse (3) umfasst, wobei die innere Oberfläche des Lagergehäuses (3) mit einer Umfangsmittelnut (3a) versehen ist, die die Federmittel (4) wenigstens teilweise aufnimmt, **dadurch gekennzeichnet, dass** die Federmittel (4) ein lang gestrecktes Stahlblech (4a) mit mehreren Aussparungen (4b), die in einer Oberfläche des Stahlblechs (4a) ausgebildet sind, um mehrere in Längsrichtung ausgerichtete Vorsprünge (4c) auf der anderen Oberfläche des Stahlblechs zu schaffen, umfassen, wobei das Stahlblech (4a) in eine zylindrische Form gebogen ist, derart, dass sich die Aussparungen (4b) und die Vorsprünge (4c) auf der inneren Oberfläche bzw. auf der äußeren Oberfläche des gebogenen Stahlblechs befinden, dass jeder der Vorsprünge (4c) eine gekrümmte Oberfläche (4d) mit einer Erzeugungslinie, die sich im Wesentlichen parallel zu der Drehwelle (1) erstreckt, besitzt, dass die innere Umfangsfläche der in der Nut (3a) aufgenommenen Federmittel mit der äußeren Umfangsfläche der Lagerbuchse in Kontakt ist und dass die Spitzen der Vorsprünge (4c) am äußeren Umfang der Federmittel (4) mit der Bodenfläche der Nut (3a) in Kontakt sind.

## Revendications

1. Palier à amortissement par film comprimé qui comprend un coussinet de palier (2) destinée à supporter un arbre de rotation (1), un carter de palier (3) s'étendant autour du coussinet de palier (2) et un moyen élastique pour état concentrique (4) entre le coussinet de palier 2 et le carter de palier (3), la surface intérieure du carter de palier (3) étant dotée d'une gorge centrale circonférentielle (3a) recevant au moins partiellement le moyen élastique (4), **caractérisé en ce que** le moyen élastique (4) comprend une tôle d'acier allongée (4) ayant une pluralité d'évidements (4b) formés dans une première surface de la tôle d'acier (4a) pour fournir une pluralité de protubérances alignées longitudinalement (4c) sur l'autre surface de la tôle d'acier, la tôle d'acier (4a) étant pliée pour adopter une forme cylindrique de telle sorte que les évidements (4b) et la protubérance (4c) soient situés sur la surface intérieure et la surface extérieure, respectivement, de la tôle d'acier pliée, **en ce que** chacune des protubérances (4c) présente une surface courbée (4b) ayant une génératrice s'étendant sensiblement parallèlement à l'arbre de rotation (1), **en ce que** la périphérie intérieure du moyen élastique (4) reçu dans la gorge (3a) est en contact avec la périphérie extérieure du coussinet de palier et **en ce que** les extrémités des protubérances (4c) sur la périphérie extérieure du moyen élastique (4) sont en contact avec la surface inférieure de la gorge (3a).
